# EUROPEAN PATENT SPECIFICATION

(11) **EP 4 198 410 B1**
(45) Date of publication and mention of the grant of the patent: **16.10.2024**
(21) Application number: 21216085.7
(22) Date of filing: 20.12.2021
(51) Int. Cl.: F24H 1/12, F24H 1/00, B60H 1/22, F24H 9/00, F24H 9/1818, H05B 3/48

(54) **AN ELECTRICAL HEATER**
ELEKTRISCHE HEIZVORRICHTUNG
CHAUFFAGE ÉLECTRIQUE

(43) Date of publication of application: 21.06.2023
(73) Proprietor: VALEO AUTOKLIMATIZACE s.r.o., 26990 Rakovnik (CZ)
(72) Inventor: GAS, Pierre-Louis, 26990 Rakovnik (CZ); DECOOL, Laurent, 78320 Le Mesnil-Saint-Denis (FR); KARAASLAN, Serif, 78320 Le Mesnil-Saint-Denis (FR)
(74) Representative: Valeo Systèmes Thermiques

(56) References cited:
- CN-A- 113 803 877
- FR-A1- 3 033 871
- US-A1- 2009 126 654
- US-A1- 2014 086 566

## Description

The present invention relates to a heat exchanger, particularly to an electrical heater for a vehicle.

A vehicle generally includes a heater for heating air supplied to a passenger compartment. Alternatively, the heater is used to supply heated air to demist or defrost the windscreen. In some cases the heater is used to supply hot air or hot coolant for cold starting the engine. The air to be heated is generally passed through a heat exchanger which includes a heating element such as for example, heat exchange flow pipes through which a heated fluid circulates in case of thermal heater or an electrical resistive heater supplied with current. Particularly, the air to be heated circulates across the heat exchanger and extracts heat from the heating element.

More specifically, a conventional electrical heater generally includes a housing forming a fluid flow chamber and a plurality of heating elements disposed inside the housing. The fluid flow chamber is defined by a pair of opposite top and bottom faces, a pair of opposite side faces and a pair of opposite front and rear headers. The pair of opposite top and bottom faces, the pair of opposite side faces and the pair of opposite front and rear headers are all connected to each other to define an enclosure. The fluid flow chamber further includes an inlet for ingress of fluid inside the fluid flow chamber and an outlet for egress of the heat exchange fluid after the heat exchange fluid had undergone heat exchange, particularly, after the heat exchange fluid had extracted heat from the heating elements. The heating elements are supported between the front and rear headers and are received inside the fluid flow chamber. The heating elements are separated by fins that improve heat exchange between the electric heating elements and the fluid flowing around the electric heating elements by enhancing the heat exchange contact surface and the contact time between the fluids and the heating elements.

Each heating element includes a tube that receives electric core therein. The tube together with the electric core forms the heating element. The electric core, is for example, PTC (Positive Temperature Coefficient) resistors. Each tube may have several electric cores, which may be arranged one after the other in a direction of the tube. The electric cores are preferably distributed evenly along the tubes. Each of the heating elements is preferably supplied with power selectively. Specifically, the electric core of each heating element is supplied with current independently of the current supplied to the electric core of the other heating elements and can therefore be supplied with a different current, in particular, in terms of it's intensity, from the current flowing through the other heating elements. Each heating element includes electrodes on both sides for power supply through the heating element. Further, the heating elements includes electrically insulating and thermally conductive material layers. The layers being located between one of the electrodes and walls of the tube. In this way, the tube is electrically insulated from the electrodes and the electric core but thermally in contact with them.

For efficient performance of the electrical fluid heater, for example, a high voltage coolant heater, the heat exchange fluid, for example the coolant is required to be homogeneously distributed within the fluid flow chamber to enable sufficient contact between the heat exchange fluid and the heating elements for heat extraction therefrom. However, the heat exchange fluid tends to follow the shortest path between the inlet and the outlet. Consequently, the coolant received in the fluid flow chamber from the inlet egresses from the outlet of the fluid flow chamber, while extracting only limited amount of heat from the heating elements. Due to such tendency of the coolant to follow the shortest path between the inlet and the outlet and non-uniform distribution of coolant within the fluid flow chamber, particularly, around the heating elements, there is formation of dead zones inside the fluid flow chamber, particularly, near the walls of the fluid flow chamber, an more particularly, near the top and bottom walls of the fluid flow chamber. Further, there is insufficient contact and insufficient heat exchange between heating elements and the coolant flowing around the heating elements near walls of the fluid flow chamber. Accordingly, the coolant escapes through the outlet without extracting sufficient heat from the heating elements disposed inside the fluid flow chamber. Accordingly, the thermal efficiency and performance of the electrical fluid heater is drastically reduced. Prior art documents disclose electrical fluid heaters configured with arrangements that try to homogeneously distribute the coolant inside the fluid flow chamber and around the heating elements to prevent formation of dead zones inside the fluid flow chamber and around the heating elements. The document US2014/0086566 discloses a known fluid heater with specific fluid circulating means.

However, none of the prior art address the problem of formation of dead zones proximal to walls of the fluid flow chambers, particularly, near the top and bottom face of the fluid flow chamber of the electrical heater. Further, none of the prior art electrical fluid heaters provide an arrangement for positioning and mounting of micro temperature sensors proximal to inlet and outlet of the fluid flow chamber for accurate temperature measurements at the desired locations for better control.

Accordingly, there is a need for an electrical fluid heater that obviates the problems of inefficient heat exchange and reduced performance faced by conventional electrical fluid heaters due to formation of dead zones inside the fluid flow chamber thereof. Further, there is a need for an arrangement for homogeneously distributing a coolant around the heating elements received inside the fluid flow chamber of the electrical fluid heaters, particularly, the portions of the heating elements disposed proximal to the top and bottom face of the fluid flow chamber to prevent formation of dead zones inside the fluid flow chamber of the electrical fluid heaters.

An object of the present invention is to provide an electrical fluid heater that obviates the problem of inefficient heat exchange and reduced performance thereof due to formation of dead zones inside the fluid flow chamber thereof and around the heating elements.

Another object of the present invention is to provide an electrical fluid heater configured with an arrangement to uniformly distribute coolant inside a fluid flow chamber thereof to prevent formation of dead zones therein and around the heating elements.

Yet another object of the present invention is to provide an electrical fluid heater configured with an arrangement to uniformly distribute the coolant inside a fluid flow chamber thereof, wherein the arrangement further holds and retains the electric heating elements in position within the fluid flow chamber.

Still another object of the present invention is to provide an electrical fluid heater configured with an arrangement to uniformly distribute coolant within the fluid flow chamber and around the electric heating elements, thereby improving scavenging of the coolant within the fluid flow chamber.

Another object of the present invention is to provide an electrical fluid heater that is configured with features, for example, protruded sections or boss configured proximal to the inlet and outlet for positioning and mounting of temperature micro sensors thereon for accurate temperature measurements at the desired locations for better control.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

An electrical fluid heater includes a housing and a plurality of electric heating elements. The housing forms a fluid flow chamber. The fluid flow chamber is formed with an inlet for ingress of fluid inside the fluid flow chamber and an outlet for the egress of fluid from the fluid flow chamber. The plurality of the heating elements disposed inside the fluid flow chamber are heated by resistive heating to heat fluid flowing around thereof as the fluid flows in the fluid flow chamber from the inlet to the outlet. The electric heating elements are formed as heating bars extending through the fluid flow chamber from one extremity of the fluid flow chamber to the other. The heater includes a plurality of intermediate baffles arranged in spaced apart configuration with respect to each other within the fluid flow chamber and formed with re-directing means to redirect the fluid received inside the fluid flow chamber to uniformly distribute the fluid within the fluid flow chamber and define a torturous fluid flow path between the inlet and the outlet of the fluid flow chamber.

Generally, each intermediate baffle includes a plurality of teeth defining a plurality of slots that are aligned with slots of other intermediate baffles, wherein the aligned slots are receiving and supporting the heating elements.

Particularly, the extreme ends of the fluid flow chamber are closed by end headers formed with slits for receiving and holding the heating elements.

Generally, the re-directing means includes slots formed on at least one of the intermediate baffles that are comparatively larger than the dimension of the corresponding heating elements received and held therein, leaving a gap between at least one edge of the slots and the corresponding heating elements to permit limited fluid flow there across through the gaps between the heating element and the corresponding slots.

According to the invention, the intermediate baffles are so disposed within the fluid flow chamber to extend alternatively from a first chamber wall of the fluid flow chamber and from a second chamber wall of the fluid flow chamber opposite to the first chamber wall, the first chamber wall 10a and the second chamber wall 10b being connected and maintained spaced apart from each other by interconnecting walls, so that a first set of intermediate baffles configure a first spacing at regions proximal to the first chamber wall and a second set of intermediate baffles, configure a second spacing at regions proximal to the second chamber wall, to promote fluid scavenging from different regions inside the fluid flow chamber, giving the fluid a U-turn trajectory in each of the first and second spacing and prevent formation of the dead zones near the first chamber wall and the second chamber wall of the fluid flow chamber.

Further, at least one of the intermediate baffles divides the interior of the fluid flow chamber into separate sections that are in fluid communication with each other through either of the first spacing and the second spacing to re-direct the fluid flow inside the fluid flow chamber and prevent the fluid from following a path of least resistance between the inlet and the outlet.

Specifically, at least one of the intermediate baffles extends from the first chamber wall towards the second chamber wall and terminates at a terminal end of the intermediate baffle at a certain distance from the second chamber wall to re-direct fluid flow through the first spacing between the terminal end of the intermediate baffle and the second chamber wall.

Further, at least one of the intermediate baffles extends from the second chamber wall towards the first chamber wall and terminates at a terminal end of the intermediate baffle at a certain distance from the first chamber wall to re-direct fluid flow through the second spacing between the terminal end of the intermediate baffle and the first chamber wall.

In accordance with another embodiment of the present invention, the re-directing means includes a plurality of holes formed on at least one of the intermediate baffles that divides the interior of the fluid flow chamber into separate sections that are in fluid communication with each other through at least one of the first spacing, the second spacing and the holes, a limited amount of fluid can flow from one section of the fluid flow chamber to the other, through the holes.

Generally, the holes are arranged on the periphery of the intermediate baffle to ensure homogenous distribution inside the fluid flow chamber to regions proximal to the walls of the fluid flow chamber and preventing the fluid from following a path of least resistance between the inlet and the outlet.

Generally, each of the intermediate baffles includes a base portion and a plurality of spaced teeth extending from the base portion to define the slots between the teeth.

Preferably, the holes are formed on the base portion.

Alternatively, wherein the holes are formed on the teeth.

Further, the electrical fluid heater includes at least one temperature micro sensor mounted on a boss configured proximal to at least one of the inlet and the outlet of the fluid flow chamber.

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1 illustrates an isometric view of an electrical fluid heater in accordance with an embodiment of the present invention;
FIG. 2 illustrates an exploded view of the electrical fluid heater of the FIG. 1;
FIG. 3 illustrates an isometric sectional view of the electrical fluid heater of FIG. 1 depicting internal details thereof;
FIG. 4 illustrates a top sectional view of the electrical fluid heater of FIG. 1 depicting the arrangement of electric heating elements and an intermediate baffles disposed inside a fluid flow chamber of the electrical fluid heater;
FIG. 5 illustrates an isometric view of an electric heating element;
FIG. 6 illustrates a side sectional view of the electrical fluid heater of FIG. 1 depicting the arrangement of the intermediate baffles defining a first spacing and a second spacing with respect to a top wall and a bottom wall respectively;
FIG. 7 illustrates an isometric view of the intermediate baffle of FIG. 4;

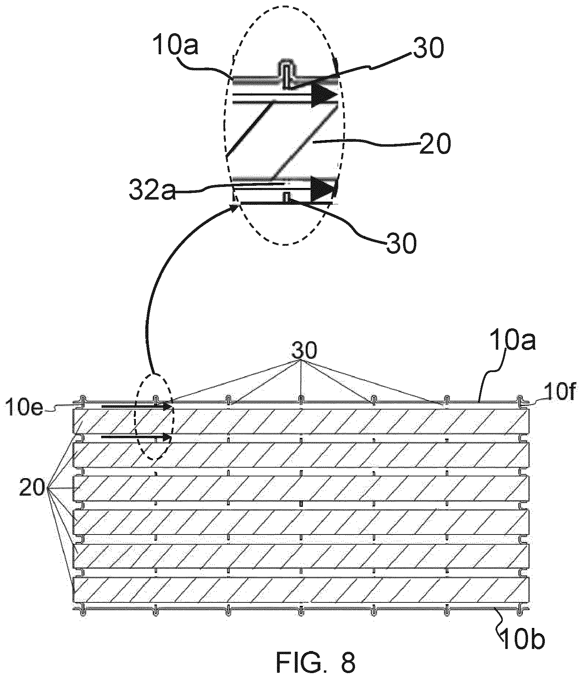

FIG. 8 illustrates a top sectional view of an electrical fluid heater in accordance with another embodiment, wherein slots formed on intermediate baffles are comparatively larger than dimension of the corresponding heating elements received and held therein.

The present invention envisages an electrical fluid heater, for example a high voltage electric heater or a coolant heater, hereinafter simply referred to as heater. The heater includes a fluid flow chamber and a plurality of electric heating elements. The fluid flow chamber is formed with an inlet for ingress of fluid inside the fluid flow chamber and an outlet for the egress of fluid from the fluid flow chamber. The plurality of the heating elements are disposed inside the fluid flow chamber, are heated by resistive heating to heat fluid flowing around thereof as the fluid enters the fluid flow chamber from the inlet, flows from the inlet to the outlet and egresses from the outlet. The electrical fluid heater includes a plurality of intermediate baffles arranged in spaced apart configuration with respect to each other, within the fluid flow chamber. Particularly, the intermediate baffles extend alternatively from a first chamber wall and a second chamber wall of the fluid flow chamber, to redirect the fluid received inside the fluid flow chamber. More specifically, the intermediate baffles extend alternatively from a top face of the fluid flow chamber and a bottom face of the fluid flow chamber to uniformly distribute the fluid within the fluid flow chamber and define a torturous fluid flow path between the inlet and the outlet of the fluid flow chamber. Although the present invention is described in the forthcoming description and the accompanying drawings with an example of an electric heater for a vehicle. However, the present invention is also applicable for any heat exchanger for use in vehicular and non-vehicular applications, wherein the heat exchanger includes a fluid flow chamber configured with an inlet and outlet for ingress and egress of a heat exchange fluid with respect to the fluid flow chamber, and wherein it is required to ensure homogeneous distribution of the heat exchange fluid inside the fluid flow chamber and scavenging the heat exchange fluid from the fluid flow chamber for improved heat exchange and enhancing efficiency and performance of the heat exchanger. More specifically, the present invention is also applicable for tubular heat exchanger apart from electric heater. The tubular heat exchanger includes tubular elements disposed between headers for configuring flow of first heat exchange fluid there through and a second heat exchange fluid flows around the tubular elements to undergo heat exchange with the first fluid flowing through the tubular elements.

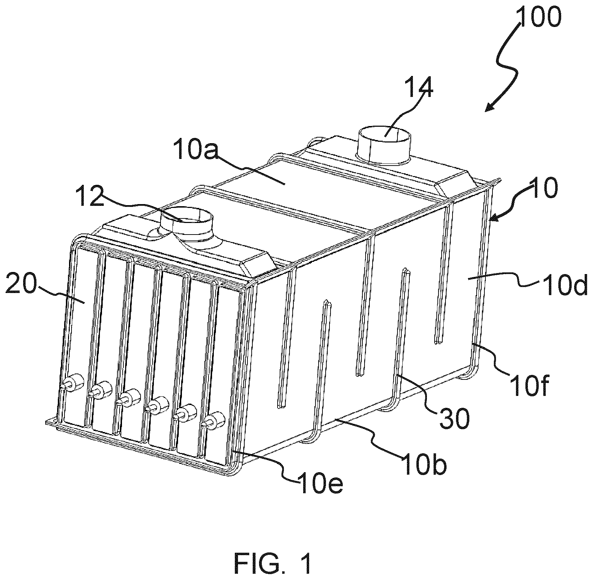

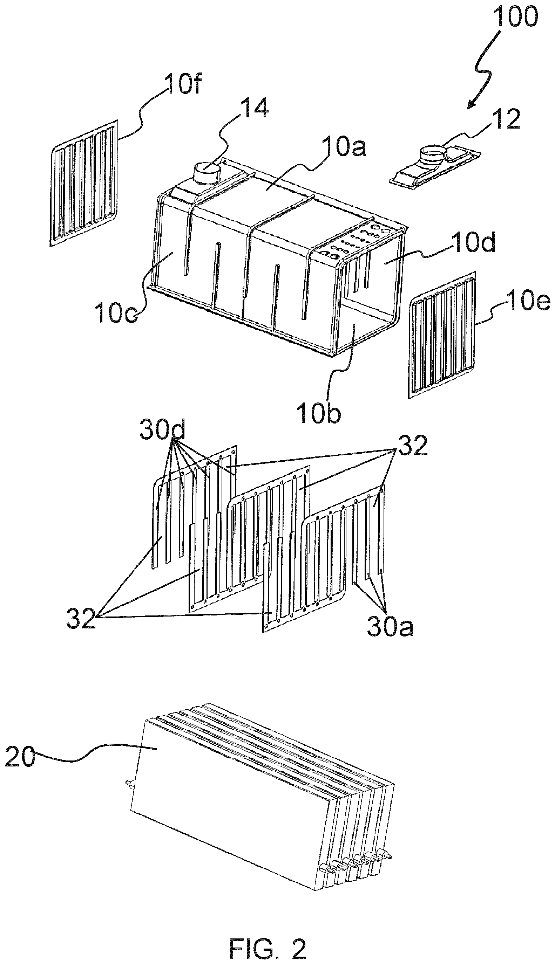

FIG. 1 and FIG. 2 illustrates an isometric view and an exploded view of an heater 100 respectively. More specifically, the electrical fluid heater 100 generally includes a housing forming a fluid flow chamber 10 and a plurality of electric heating elements, hereinafter simply referred to as heating elements 20 disposed inside the fluid flow chamber 10. The fluid flow chamber 10 is defined by a pair of opposite top and bottom faces 10a and 10b respectively, a pair of opposite side faces 10c and 10d respectively and a pair of opposite front and rear headers 10e and 10f respectively. The pair of opposite top and bottom faces 10a and 10b, the pair of opposite side faces 10c and 10d and the pair of opposite front and rear headers 10e and 10f are all connected to each other to define an enclosure. The fluid flow chamber 10 further includes an inlet 12 for ingress of heat exchange fluid inside the fluid flow chamber 10 and an outlet 14 for egress of the heat exchange fluid after the heat exchange fluid had undergone heat exchange, particularly, after the heat exchange fluid had extracted heat from the heating elements 20. Generally, the inlet 12 and the outlet 14 is formed on the same face of the electrical fluid heater, particularly the top face 10a of the electrical fluid heater. The present invention is not limited to any particular configuration of the fluid flow chamber as far as the fluid flow chamber 10 defines the enclosure for receiving and securely holding the heating elements 20 and the heat exchange fluid around the heating elements 20. Further, the inlet 12 and the outlet 14 can be configured on the same face or different faces of the fluid flow chamber 10.

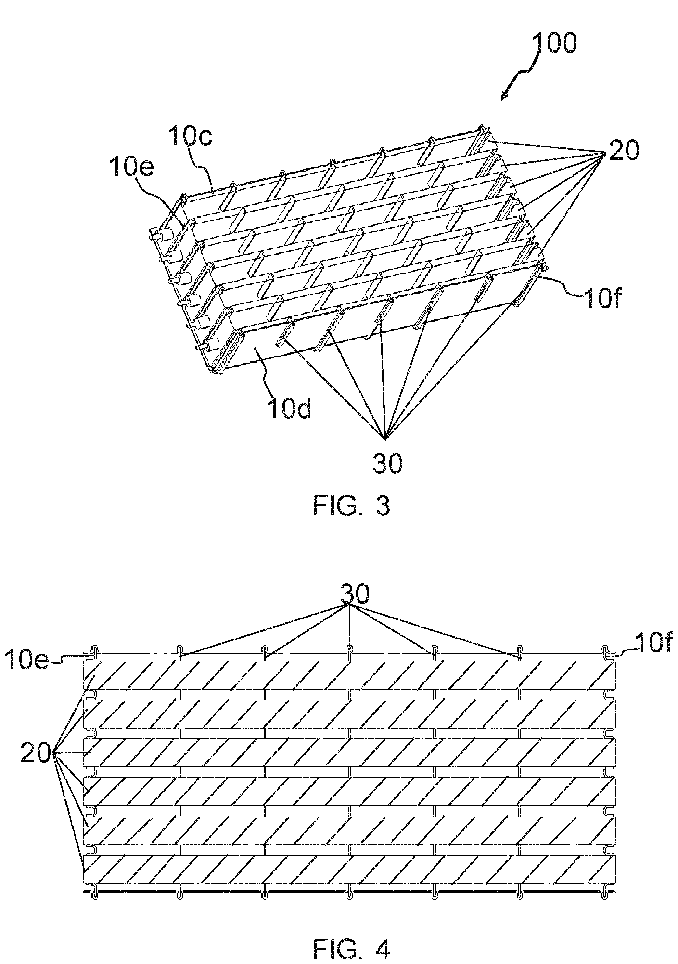

Referring to the FIG.3 and FIG. 4, the heating elements 20 are received inside the fluid flow chamber 10 and supported between the front and rear headers 10e and 10f. More specifically, the heating elements 20 are formed as heating bars that extend through the fluid flow chamber from one extremity of the fluid flow chamber to the other. The front and rear headers 10e and 10f are in form of a plate with slits 16e and 16f formed thereon. More specifically, slits 16e and 16f are formed on the front and rear headers 10e and 10f receive and supports end portions of the corresponding heating elements 20. With such configuration, the heating elements 20 are arranged in spaced apart configuration with respect to each other. Further, the electrical fluid heater 100 includes a plurality of intermediate baffles 30 disposed between the headers 10e and 10f. Each intermediate baffle 30 includes a plurality of slots 32 formed thereon, wherein, the slots 32 formed on the intermediate baffle 30 are aligned with the slots 32 formed on the other intermediate baffles 30 and the slits 16e and 16f formed on the end headers 10e and 10f. With such configuration, the intermediate baffles 30 securely receive, hold and support the heating elements 20 between the headers 10e and 10f.

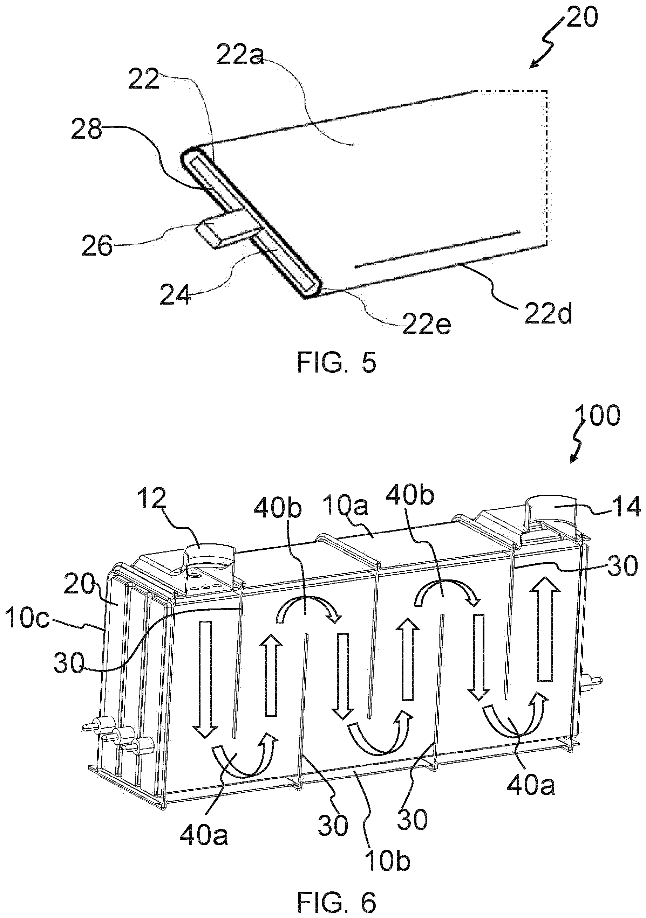

The heating elements 20 are heated by resistive heating to heat fluid flowing around thereof, as the fluid flows from the inlet 12 to the outlet 14. Referring to the FIG. 5, each heating element 20 includes a tube 22 that receives an electrical core 24 therein. The tube 22 includes a pair of opposite long sides 22a and 22b (not depicted) connected by a pair of opposite short sides 22c (not depicted) and 22d to define an enclosure with opposite open ends 22e and 22f. The tube 22 together with the electric core 24 forms the heating element 20. The electric core 24, is for example, PTC (Positive Temperature Coefficient) resistors. Each tube 22 may receive several electric cores 24 therein, which may be arranged one after the other in a direction of the tube 22. The electric cores 24 are preferably distributed evenly along the tubes 22. Each of the heating elements 20 is preferably supplied with power selectively. Specifically, the electric core 24 of each heating element 20 is supplied with current independently of the current supplied to the electric core 24 of the other heating elements 20 and can therefore be supplied with a different current, in particular, in terms of it's intensity, from the current flowing through the other heating elements 20. Each heating element 20 includes electrodes 26 on both sides for power supply through the heating element 20. Further, the heating elements 20 includes electrically insulating and thermally conductive material layers 28. The layers 28 being located between one of the electrodes 26 and the long sides 22a and 22b of the tube 22. In this way, the tube 22 is electrically insulated from the electrodes 26 and the electric core 24 but thermally in contact with them. Optionally, the heating elements 20 are separated by fins 26 that improve heat exchange between the heating elements 20 and the fluid around the heating elements 20 by enhancing the heat exchange surface and the contact time for heat exchange between the heating elements 20 and fluid around the heating elements 20.

Referring to the FIG. 6 of the accompanying drawings, the plurality of intermediate baffles 30 are arranged in spaced apart configuration with respect to each other within the fluid flow chamber 10 and formed with re-directing means. Generally, the intermediate baffles 30 are so disposed within the fluid flow chamber 10 that the intermediate baffles 30 extend alternatively from a first chamber wall, for example, the top face 10a and a second chamber wall, for example, the bottom face 10b of the fluid flow chamber 10. Such configuration of the intermediate baffles 30 redirect the fluid received inside the fluid flow chamber 10 to uniformly distribute fluid inside the fluid flow chamber 10. More specifically, such a configuration of the intermediate baffles 30 that extends alternatively from the top face 10a and the bottom face 10b opposite to the top face 10a define a torturous fluid flow path between the inlet 12 and the outlet 14 of the fluid flow chamber 10 instead of following a path of least resistance between the inlet 12 and the outlet 14. Further, such configuration of a first set of intermediate baffles 30 configures a first spacing 40a at regions proximal to the top face 10a and a second set of intermediate baffles configures second spacing 40b at region proximal to the bottom face 10b of the fluid flow chamber 10. Particularly, such configuration of the intermediate baffles promotes fluid scavenging from different regions inside the fluid flow chamber 10 giving the fluid a U-turn trajectory in each of the first and second spacing 40a and 40b and preventing formation of dead zones near the top face 10a and the bottom face 10b of the fluid flow chamber 10. Generally, at least one of the intermediate baffles 30 divides the interior of the fluid flow chamber 10 into separate sections that are in fluid communication with each other through either one of the first spacing 40a and the second spacing 40b. Such configuration of spaced apart intermediate baffles 30 configuring the first spacing 40a and the second spacing 40b re-directs the fluid received inside the fluid flow chamber 10 and changes course of fluid flow from natural course of least resistance between the inlet 12 and the outlet 14. Specifically, at least one of the intermediate baffles 30 extends from the top face 10a towards the bottom face 10b and terminates at a terminal end 30a of the intermediate baffle 30 at a certain distance from of the bottom face 10b to re-direct fluid flow through the first spacing 40a between the terminal end 30a of the intermediate baffle 30 and the bottom face 10b instead of following path of least resistance between the inlet 12 and the outlet 14. Moreover, at least one of the intermediate baffles 30 extends from the bottom face 10b towards the top face 10a and terminates at a terminal end 30a of the intermediate baffle 30 at a certain distance from the top face 10a to re-direct fluid flow through the second spacing 40b between the terminal end 30a of the intermediate baffle 30 and the top face 10a instead of following the path of least resistance between the inlet 12 and the outlet 14. The position of the intermediate baffles 30 inside the fluid flow chamber 10 and the first and second spacing 40a and 40b configured by the intermediate baffle 30 is based according to the position of the inlet 12 and the outlet 14 formed on the fluid flow chamber 10 to achieve homogeneous distribution of the fluid in the fluid flow chamber 10.

In accordance with another embodiment the intermediate baffle 30 extends alternatively from first and second side faces 10c and 10d respectively. In one example, the at least one of the intermediate baffles 30 extends from the first side face 10c towards the second side face 10d and terminates at a terminal end 30a of the intermediate baffle 30 at a certain distance from of the second side face 10d. With such configuration of the intermediate baffle 30, the intermediate baffle 30 re-directs fluid flow through the spacing between the terminal end 30a of the intermediate baffle 30 and the second side face 10d instead of following path of least resistance between the inlet 12 and the outlet 14.

In one example, the at least one of the intermediate baffles 30 extends from the second side face 10d towards the first side face 10c and terminates at a terminal end 30a of the intermediate baffle 30 at a certain distance from of the first side face 10c. With such configuration of the intermediate baffle 30, the intermediate baffle 30 re-directs fluid flow through the spacing between the terminal end 30a of the intermediate baffle 30 and the first side face 10c instead of following path of least resistance between the inlet 12 and the outlet 14. The intermediate baffles 30 retains the fluid in contact with the heating elements 20 between the inlet 12 and the outlet 14, thereby preventing the fluid entering the inlet 12 from escaping through the outlet 14 without proper contact with the heating elements 20 and without sufficiently extracting heat from the heating elements 20. With such configuration, the baffles 30 redirects the fluid flow to follow a torturous path instead of following a path of least resistance between the inlet 12 and the outlet 14, thereby promoting through-mixing and preventing the formation of dead zones inside the fluid flow chamber 10. The baffles 30 are configured with additional redirecting means in the form of holes and gaps to further enhance the fluid flow in region around the heating elements 20 and regions proximal to the walls of the fluid flow chamber 10 to promote through-mixing and prevent formation of dead zones inside the fluid flow chamber 10.

In accordance an embodiment of the present invention, at least one of the intermediate baffles 30 is similar in construction to the end headers 10e and 10f, wherein the intermediate baffle 30 in formed with holes 30c configured on the periphery thereof. With such configuration, the intermediate baffle 30 divides interior of the fluid flow chamber 10 into separate sections and also re-directs the fluid flow inside the fluid flow chamber 10 through holes 30c formed on intermediate baffle. Particularly, such configuration of the holes 30c promotes fluid flow through the holes 30c formed at the base 30b of the intermediate baffle 30 disposed proximal to the walls of the fluid flow chamber 10 in the assembled configuration of the intermediate baffles 30 inside the fluid flow chamber 10. Accordingly, the fluid is redirected to regions proximal to the walls of the fluid flow chamber 10 and preventing fluid to follow path of least resistance between the inlet 12 and the outlet 14.

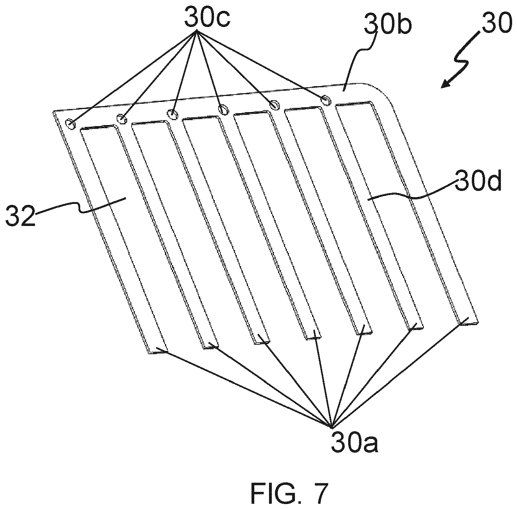

FIG. 7 illustrates an isometric view of the intermediate baffle 30. The intermediate baffles 30 includes a base portion 30b and a plurality of spaced teeth 30d extending from the base portion 30b to define the slots 32. In the assembled configuration, the slots 32 receive and securely hold the heating elements 20 therein.

The re-direction means can be in form of slots 32 formed on the intermediate baffles 30, wherein the slots 32 are larger than the corresponding heating elements 20 received therein or the re-direction means are in form of holes 30c configured on the intermediate baffles 30. Such re-direction means change the course of fluid flow and achieve homogenous distribution of flow throughout an interior of the fluid flow chamber 10. Such configuration of the intermediate baffles 30 configured with slots 32 and configuring gap 32a between the heating element 20 and the corresponding slots 32 promotes fluid flow in proximity to the heating element 20, thereby enhancing heat extraction by the fluid from the heating elements 20. In accordance with an embodiment of the present invention, the re-direction means includes slots 32 with wider openings. Particularly, at least one of the intermediate baffles 30 is configured with the slots 32 that are comparatively larger than the dimension of the corresponding heating elements 20 received and held therein, leaving a gap between at least one edge of the slots 32 and the corresponding heating elements 20 to permit limited fluid flow there across through the gaps 32a inherently formed between the heating element 20 and the corresponding slots 32.

In accordance with an embodiment of the present invention, at least one of the intermediate baffles 30 includes a plurality of holes 30c formed thereon, wherein a limited amount of fluid can flow from one section of the fluid flow chamber 10 to the other, through the holes 30c. Particularly, at least one of the intermediate baffles 30 that at least partially divides interior of the fluid flow chamber 10 into separate sections that are in fluid communication with each other through either one of the first spacing 40a and the second spacing 40b, also permits limited fluid flow there across through the holes 30c formed thereon. In case of the intermediate baffle 30 illustrated in FIG. 7, the holes 30c are formed on the base portion 30b. With the intermediate baffles 30 generally extending from the walls of the fluid flow chamber 10 and holes 30c formed on the base portion 30b that is disposed proximal to the walls of the fluid flow chamber 10, the fluid flow is re-directed to regions near the walls that are prone dead zone formation due to insufficient flow thereto. Accordingly, fluid flow is homogeneously distributed along the walls of the fluid flow chamber 10. Alternatively, the holes 30c are formed on the teeth 30d. Apart from re-directing the fluid to regions proximal to the walls of the fluid flow chamber 10 and/ or the dead zones that could be formed inside fluid flow chamber 10, the holes 30c perform additional function of scavenging the air bubbles out of the fluid flow chamber 10. Similarly, the gaps also assist in scavenging the air bubbles out of the fluid flow chamber 10. The removal of the air bubbles from inside the fluid flow chamber 10 is essential for efficient performance of the fluid heater because if the air bubbles remain inside the fluid flow chamber 10, these can hinder the heat exchange and adversely impact efficiency and performance of the heat exchanger.

More specifically, with such configuration of the intermediate baffles 30, the holes 30c and gaps 32a configured by the intermediate baffles 30, the fluid is redirected towards the peripheral walls of the fluid flow chamber 10, particularly towards the top face 10a and the bottom face 10b of the fluid flow chamber 10 to prevent the formation of dead zones thereat. Such configuration of the baffles 30, the holes 30c and gaps 32a configured by the intermediate baffles 30 re-directs the fluid towards regions inside the fluid flow chamber 10 that are prone to formation of dead zones, thereby preventing formation of dead zones inside the fluid flow chamber 10. Further, with such configuration the heat exchange fluid is uniformly distributed within the fluid flow chamber 10, thereby promoting heat exchange between the fluid and the heating elements 20 disposed inside the fluid flow chamber, thereby improving efficiency and performance of the heater 100.

The heater 100 is configured with features for positioning and mounting of temperature micro sensors proximal to at least one of the inlet and the outlet of fluid flow chamber for accurate temperature measurements at the desired locations for better control. Such configuration enables in better temperature and flow control of the fluid in the fluid flow chamber 10. With the plurality of intermediate baffles 30 extending to the interior of the fluid flow chamber 10 through which fluid flows, the intermediate baffles 30 being connected to the walls of the fluid flow chamber 10 and the temperature micro sensors being in contact with the walls, the accuracy of the temperature micro sensors is enhanced due to reduced convection heat transfer path through the fluid. More specifically, the intermediate baffles 30 conducts heat from a central area of the fluid flow chamber 10 to the temperature micro sensors via the walls. Accordingly, the temperature of the fluid in the interior of the fluid flow chamber 10 can be accurately measured with the temperature micro sensors arranged outside of the fluid flow chamber 10. With such configuration, the temperature micro sensor can be easily connected to a printed circuit board outside of the fluid flow chamber.

In any case, the invention cannot and should not be limited to the embodiments specifically described in this document, as other embodiments might exist. The invention shall spread to any equivalent means and any technically operating combination of means without departing from the scope of the invention as defined by the claims.

## Claims

1. An electrical fluid heater (100) comprising:
• a housing forming a fluid flow chamber (10) with an inlet (12) for ingress of fluid inside the fluid flow chamber (10) and an outlet (14) for the egress of fluid from the fluid flow chamber (10);
• a plurality of electrical heating elements (20) disposed inside the fluid flow chamber (10) and adapted to be heated by resistive heating to heat fluid flowing around thereof as the fluid flows in the chamber (10) from the inlet (12) to the outlet (14), the electrical heating elements (20) being formed as heating bars extending through the fluid flow chamber (10) from one extremity of the fluid flow chamber (10) to the other;
the electrical fluid heater (100) comprising a plurality of intermediate baffles (30) arranged in spaced apart configuration with respect to each other within the fluid flow chamber (10) and formed with re-directing means adapted to redirect the fluid received inside the fluid flow chamber (10) to uniformly distribute the fluid inside the fluid flow chamber (10) and define a torturous fluid flow path between the inlet (12) and the outlet (14) of the fluid flow chamber (10); **characterized in that** the intermediate baffles (30) are so disposed within the fluid flow chamber (10) to extend alternatively from a first chamber wall (10a) of the fluid flow chamber (10) and from a second chamber wall (10b) of the fluid flow chamber (10) opposite to the first chamber wall (10a), the first chamber wall (10a) and the second chamber wall (10b) being connected and maintained spaced apart from each other by interconnecting walls, so that a first set of baffles (30) configure a first spacing (40a) at regions proximal to the first chamber wall (10a) and a second set of baffles (30) configure a second spacing (40b) at regions proximal to the second chamber wall (10b) to promote fluid scavenging from different regions inside the fluid flow chamber (10) giving the fluid a U-turn trajectory in each of the first and second spacing (40a, 40b) and to prevent formation of dead zones near the first chamber wall (10a) and the second chamber wall (10b) of the fluid flow chamber (10).

2. The electrical fluid heater (100) as claimed in the preceding claim, wherein each intermediate baffle (30) is comprising a plurality of teeth defining a plurality of slots (32) that are aligned with slots (32) of other intermediate baffles (30) and wherein the aligned slots (32) are receiving and supporting the heating elements (20).

3. The electrical fluid heater (100) as claimed in any of the preceding claims, wherein the extreme ends of the fluid flow chamber (10) are closed by end headers (10e) and (10f) formed with slits (16e) and (16f) for receiving and holding the heating elements (20).

4. The electrical fluid heater (100) as claimed in the claim 2, wherein the re-directing means comprises slots (32) formed on at least one of the intermediate baffles (30) that are comparatively larger than the dimension of the corresponding heating elements (20) received and held therein, leaving a gap between at least one edge of the slots (32) and the corresponding heating elements (20) to permit limited fluid flow there across through the gaps (32a) between the heating element (20) and the corresponding slots (32).

5. The electrical fluid heater (100) as claimed in the previous claim, wherein at least one of the intermediate baffles (30) is adapted to divide the interior of the fluid flow chamber (10) into separate sections that are in fluid communication with each other through either one of the first spacing (40a) and the second spacing (40b) to re-direct the fluid flow inside the fluid flow chamber (10) and prevent the fluid from following a path of least resistance between the inlet (12) and the outlet (14).

6. The electrical fluid heater (100) as claimed in any of the preceding claims, wherein at least one of the intermediate baffles (30) extends from the first chamber wall (10a) towards the second chamber wall (10b) and terminates at a terminal end (30a) of the intermediate baffle (30) at a certain distance from the second chamber wall (10b) to re-direct fluid flow through the first spacing (40a) between the terminal end (30a) of the intermediate baffle (30) and the second chamber wall (10b).

7. The electrical fluid heater (100) as claimed in any of the preceding claims, wherein at least one of the intermediate baffles (30) extends from the second chamber wall (10b) towards the first chamber wall (10a) and terminates at a terminal end (30a) of the intermediate baffle (30) at a certain distance from the first chamber wall (10a) to re-direct fluid flow through the second spacing (40b) between the terminal end (30a) of the intermediate baffle (30) and the first chamber wall (10a).

8. The electrical fluid heater (100) as claimed in any of the proceeding claims, wherein the redirecting means comprises a plurality of holes (30c) formed on at least one of the intermediate baffles (30) adapted to divide the interior of the fluid flow chamber (10) into separate sections that are in fluid communication with each other through at least one of the first spacing (40a), the second spacing (40b) and the holes (30c), a limited amount of fluid can flow from one section of the fluid flow chamber (10) to the other, through the holes (30c).

9. The electrical fluid heater (100) as claimed in the previous claim, wherein the holes (30c) are arranged on the periphery of the intermediate baffle (30) to ensure homogenous distribution inside the fluid flow chamber (10) to regions proximal to the walls of the fluid flow chamber (10) and preventing the fluid from following a path of least resistance between the inlet (12) and the outlet (14).

10. The electrical fluid heater (100) as claimed in claim 2, wherein each of the intermediate baffles (30) comprises a base portion (30b) and a plurality of spaced teeth (30d) extending from the base portion (30b) to define the slots (32) between the teeth (30d).

11. The electrical fluid heater (100) as claimed in the previous claim combined with claim 9, wherein the holes (30c) are formed on the base portion (30b).

12. The electrical fluid heater (100) as claimed in claims 9 and 10, wherein the holes (30c) are formed on the teeth (30d).

13. The electrical fluid heater (100) as claimed in any of the preceding claims comprising a temperature sensor mounted on a boss configured proximal to at least one of the inlet and the outlet of the fluid flow chamber (10).

## Patentansprüche

1. Elektrischer Flüssigkeitserhitzer (100), der Folgendes umfasst:
• ein Gehäuse, das eine Flüssigkeitsströmungskammer (10) mit einem Einlass (12) für Eintritt von Flüssigkeit ins Innere der Flüssigkeitsströmungskammer (10) und einen Auslass (14) für den Austritt von Flüssigkeit aus der Flüssigkeitsströmungskammer (10) bildet;
• mehrere elektrische Heizelemente (20), angeordnet im Inneren der Flüssigkeitsströmungskammer (10) und dazu angepasst, durch resistives Heizen erhitzt zu werden, um Flüssigkeit, die darum herum strömt, zu erhitzen, wenn die Flüssigkeit in der Kammer (10) vom Einlass (12) zum Auslass (14) strömt, wobei die elektrischen Heizelemente (20) als Heizstäbe ausgebildet sind, die sich durch die Flüssigkeitsströmungskammer (10) von einem äußersten Ende der Flüssigkeitsströmungskammer (10) zum anderen erstrecken;
wobei der elektrische Flüssigkeitserhitzer (100) mehrere Zwischenleitbleche (30) umfasst, die in einer voneinander beabstandeten Auslegung bezüglich zueinander innerhalb der Flüssigkeitsströmungskammer (10) angeordnet und mit Umleitungsmitteln gebildet sind, die dazu angepasst sind, die im Inneren der Flüssigkeitsströmungskammer (10) aufgenommene Flüssigkeit gleichförmig im Inneren der Flüssigkeitsströmungskammer (10) zu verteilen und einen langwierigen Flüssigkeitsströmungspfad zwischen dem Einlass (12) und dem Auslass (14) der Flüssigkeitsströmungskammer (10) zu definieren;
**dadurch gekennzeichnet, dass**
die Zwischenleitbleche (30) so innerhalb der Flüssigkeitsströmungskammer (10) angeordnet sind, dass sie sich alternativ von einer ersten Kammerwand (10a) der Flüssigkeitsströmungskammer (10) und von einer zweiten Kammerwand (10b) der Flüssigkeitsströmungskammer (10) gegenüber der esten Kammerwand (10a) erstrecken, wobei die erste Kammerwand (10a) und die zweite Kammerwand (10b) durch Zwischenverbindungswände verbunden und voneinander beabstandet gehalten werden, sodass eine erste Menge von Leitblechen (30) einen ersten Abstand (40a) bei Regionen proximal zur ersten Kammerwand (10a) auslegt und eine zweite Menge von Leitblechen (30) einen zweiten Abstand (40b) bei Regionen proximal zur zweiten Kammerwand (10b) auslegt, um Flüssigkeitsspülung von unterschiedlichen Regionen innerhalb der Flüssigkeitsströmungskammer (10) zu fördern, der Flüssigkeit eine Kehrtwendungstrajektorie in jedem aus dem ersten und dem zweiten Abstand (40a, 40b) verleihend, und die Bildung von Totzonen nahe der ersten Kammerwand (10a) und der zweiten Kammerwand (10b) der Flüssigkeitsströmungskammer (10) zu verhindern.

2. Elektrischer Flüssigkeitserhitzer (100) nach dem vorhergehenden Anspruch, wobei jedes Zwischenleitblech (30) mehrere Zähne umfasst, die mehrere Aussparungen (32) definieren, die mit Aussparungen (32) von anderen Zwischenleitblechen (30) ausgerichtet sind und wobei die ausgerichteten Aussparungen (32) die Heizelemente (20) aufnehmen und stützen.

3. Elektrischer Flüssigkeitserhitzer (100) nach einem der vorhergehenden Ansprüche, wobei die äußersten Enden der Flüssigkeitsströmungskammer (10) durch Endköpfe (10e) und (10f) geschlossen werden, die mit Schlitzen (16e) und (16f) zum Aufnehmen und Halten der Heizelemente (20) gebildet sind.

4. Elektrischer Flüssigkeitserhitzer (100) nach Anspruch 2, wobei das Umleitungsmittel Aussparungen (32) umfasst, die an zumindest einem der Zwischenleitbleche (30) gebildet sind, die vergleichsweise größer als die Dimension der darin aufgenommenen und gehaltenen entsprechenden Heizelemente (20) sind, eine Lücke zwischen zumindest einer Kante der Aussparungen (32) und den entsprechenden Heizelementen (20) lassend, um begrenzte Flüssigkeitsströmung dort quer durch die Lücken (32a) zwischen dem Heizelement (20) und den entsprechenden Aussparungen (32) zu ermöglichen.

5. Elektrischer Flüssigkeitserhitzer (100) nach dem vorhergehenden Anspruch, wobei zumindest eines der Zwischenleitbleche (30) dazu angepasst ist, den Innenraum der Flüssigkeitsströmungskammer (10) in separate Abschnitte zu teilen, die in Fluidverbindung miteinander über jeden aus dem ersten Abstand (40a) und dem zweiten Abstand (40b) sind, um die Flüssigkeitsströmung innerhalb der Flüssigkeitsströmungskammer (10) umzuleiten und zu verhindern, dass die Flüssigkeit einem Pfad des geringsten Widerstands zwischen dem Einlass (12) und dem Auslass (14) folgt.

6. Elektrischer Flüssigeitserhitzer (100) nach einem der vorhergehenden Ansprüche, wobei sich zumindest eines der Zwischenleitbleche (30) von der ersten Kammerwand (10a) in Richtung der zweiten Kammerwand (10b) erstreckt und an einem Abschlussende (30a) des Zwischenleitblechs (30) bei einem gewissen Abstand von der zweiten Kammerwand (10b) endet, um Flüssigkeitsströmung durch den ersten Abstand (40a) zwischen dem Abschlussende (30a) des Zwischenleitblechs (30) und der zweiten Kammerwand (10b) umzuleiten.

7. Elektrischer Flüssigeitserhitzer (100) nach einem der vorhergehenden Ansprüche, wobei sich zumindest eines der Zwischenleitbleche (30) von der zweiten Kammerwand (10b) in Richtung der ersten Kammerwand (10a) erstreckt und an einem Abschlussende (30a) des Zwischenleitblechs (30) bei einem gewissen Abstand von der ersten Kammerwand (10a) endet, um Flüssigkeitsströmung durch den zweiten Abstand (40b) zwischen dem Abschlussende (30a) des Zwischenleitblechs (30) und der ersten Kammerwand (10a) umzuleiten.

8. Elektrischer Flüssigkeitserhitzer (100) nach einem der vorhergehenden Ansprüche, wobei das Umleitungsmittel mehrere Löcher (30c) umfasst, die an zumindest einem der Zwischenleitbleche (30) gebildet sind, angepasst zum Teilen des Innenraums der Flüssigkeitsströmungskammer (10) in separate Abschnitte, die in Fluidverbindung miteinander über zumindest eines aus dem ersten Abstand (40a), dem zweiten Abstand (40b) und den Löchern (30c) sind, wobei eine begrenzte Menge von Flüssigkeit von einem Abschnitt der Flüssigkeitsströmungskammer (10) über die Löcher (30c) zum anderen strömen kann.

9. Elektrischer Flüssigkeitserhitzer (100) nach dem vorhergehenden Anspruch, wobei die Löcher (30c) am Umfang des Zwischenleitblechs (30) angeordnet sind, um eine homogene Verteilung im Inneren der Flüssigkeitsströmungskammer (10) zu Regionen proximal zu den Wänden der Flüssigkeitsströmungskammer (10) sicherzustellen, und verhindernd, dass Flüssigkeit einem Pfad des geringsten Widerstands zwischen dem Einlass (12) und dem Auslass (14) folgt.

10. Elektrischer Flüssigkeitserhitzer (100) nach Anspruch 2, wobei jedes der Zwischenleitbleche (30) einen Basisteil (30b) und mehrere beabstandete Zähne (30d), die sich vom Basisteil (30b) erstrecken, zum Definieren der Aussparungen (32) zwischen den Zähnen (30d) umfasst.

11. Elektrischer Flüssigkeitserhitzer (100) nach dem vorhergehenden Anspruch, kombiniert mit Anspruch 9, wobei die Löcher (30c) am Basisteil (30b) gebildet sind.

12. Elektrischer Flüssigkeitserhitzer (100) nach Ansprüchen 9 und 10, wobei die Löcher (30c) an den Zähnen (30d) gebildet sind.

13. Elektrischer Flüssigkeitserhitzer (100) nach einem der vorhergehenden Ansprüche, umfassend einen Temperatursensor, der an einer Erhöhung montiert ist, die proximal zu zumindest einem aus dem Einlass und dem Auslass der Flüssigkeitsströmungskammer (10) ausgelegt ist.

## Revendications

1. Appareil de chauffage électrique de fluide (100), comprenant :
• un boîtier formant une chambre d'écoulement de fluide (10) avec un orifice d'entrée (12) pour l'entrée de fluide à l'intérieur de la chambre d'écoulement de fluide (10) et un orifice de sortie (14) pour la sortie de fluide à partir de la chambre d'écoulement de fluide (10) ;
• une pluralité d'éléments chauffants électriques (20) disposés à l'intérieur de la chambre d'écoulement de fluide (10) et adaptés pour être chauffés par chauffage par résistance pour chauffer un fluide s'écoulant autour de ceux-ci au fur et à mesure que le fluide s'écoule dans la chambre (10) depuis l'orifice d'entrée (12) jusqu'à l'orifice de sortie (14), les éléments chauffants électriques (20) étant sous forme de barres chauffantes s'étendant à travers la chambre d'écoulement de fluide (10) depuis une extrémité de la chambre d'écoulement de fluide (10) jusqu'à l'autre ; l'appareil de chauffage électrique de fluide (100) comprenant une pluralité de déflecteurs intermédiaires (30) agencés dans une configuration espacés les uns par rapport aux autres au sein de la chambre d'écoulement de fluide (10) et formés avec des moyens de réorientation adaptés pour réorienter le fluide reçu à l'intérieur de la chambre d'écoulement de fluide (10) pour distribuer uniformément le fluide à l'intérieur de la chambre d'écoulement de fluide (10) et définir un chemin sinueux d'écoulement de fluide entre l'orifice d'entrée (12) et l'orifice de sortie (14) de la chambre d'écoulement de fluide (10) ;
**caractérisé en ce que**
les déflecteurs intermédiaires (30) sont disposés au sein de la chambre d'écoulement de fluide (10) afin de s'étendre en alternance depuis une première paroi de chambre (10a) de la chambre d'écoulement de fluide (10) et depuis une seconde paroi de chambre (10b) de la chambre d'écoulement de fluide (10) opposée à la première paroi de chambre (10a), la première paroi de chambre (10a) et la seconde paroi de chambre (10b) étant raccordées et maintenues espacées l'une de l'autre par des parois de raccordement mutuel, pour qu'un premier ensemble de déflecteurs (30) configurent un premier espacement (40a) dans des régions proximales à la première paroi de chambre (10a) et un second ensemble de déflecteurs (30) configurent un second espacement (40b) dans des régions proximales à la seconde paroi de chambre (10b) pour favoriser la récupération de fluide à partir de différentes régions à l'intérieur de la chambre d'écoulement de fluide (10), donnant au fluide une trajectoire de demi-tour dans chacun des premier et second espacements (40a, 40b) et pour empêcher la formation de zones mortes près de la première paroi de chambre (10a) et de la seconde paroi de chambre (10b) de la chambre d'écoulement de fluide (10).

2. Appareil de chauffage électrique de fluide (100) tel que revendiqué dans la revendication précédente, dans lequel chaque déflecteur intermédiaire (30) comprend une pluralité de dents définissant une pluralité de fentes (32) qui sont alignées avec des fentes (32) d'autres déflecteurs intermédiaires (30) et dans lequel les fentes alignées (32) reçoivent et supportent les éléments chauffants (20).

3. Appareil de chauffage électrique de fluide (100) tel que revendiqué dans l'une quelconque des revendications précédentes, dans lequel les bouts extrêmes de la chambre d'écoulement de fluide (10) sont fermés par des collecteurs de bout (10e) et (10f) formés avec des entailles (16e) et (16f) pour recevoir et retenir les éléments chauffants (20).

4. Appareil de chauffage électrique de fluide (100) tel que revendiqué dans la revendication 2, dans lequel les moyens de réorientation comprennent des fentes (32) formées sur au moins un des déflecteurs intermédiaires (30) qui sont comparativement plus grandes que la dimension des éléments chauffants correspondants (20) reçus et retenus dans celles-ci, laissant un écart entre au moins un bord des fentes (32) et les éléments chauffants correspondants (20) pour permettre un écoulement de fluide limité à travers les écarts (32a) entre l'élément chauffant (20) et les fentes correspondantes (32).

5. Appareil de chauffage électrique de fluide (100) tel que revendiqué dans la revendication précédente, dans lequel au moins un des déflecteurs intermédiaires (30) est adapté pour diviser l'intérieur de la chambre d'écoulement de fluide (10) en sections séparées qui sont en communication fluidique les unes avec les autres par l'intermédiaire de l'un ou de l'autre du premier espacement (40a) et du second espacement (40b) pour réorienter l'écoulement de fluide à l'intérieur de la chambre d'écoulement de fluide (10) et empêcher le fluide de suivre un chemin de moindre résistance entre l'orifice d'entrée (12) et l'orifice de sortie (14).

6. Appareil de chauffage électrique de fluide (100) tel que revendiqué dans l'une quelconque des revendications précédentes, dans lequel au moins un des déflecteurs intermédiaires (30) s'étend depuis la première paroi de chambre (10a) vers la seconde paroi de chambre (10b) et se termine à un bout terminal (30a) du déflecteur intermédiaire (30) à une certaine distance de la seconde paroi de chambre (10b) pour réorienter l'écoulement de fluide à travers le premier espacement (40a) entre le bout terminal (30a) du déflecteur intermédiaire (30) et la seconde paroi de chambre (10b).

7. Appareil de chauffage électrique de fluide (100) tel que revendiqué dans l'une quelconque des revendications précédentes, dans lequel au moins un des déflecteurs intermédiaires (30) s'étend depuis la seconde paroi de chambre (10b) vers la première paroi de chambre (10a) et se termine à un bout terminal (30a) du déflecteur intermédiaire (30) à une certaine distance de la première paroi de chambre (10a) pour réorienter l'écoulement de fluide à travers le second espacement (40b) entre le bout terminal (30a) du déflecteur intermédiaire (30) et la première paroi de chambre (10a).

8. Appareil de chauffage électrique de fluide (100) tel que revendiqué dans l'une quelconque des revendications précédentes, dans lequel les moyens de réorientation comprennent une pluralité de trous (30c) formés sur au moins un des déflecteurs intermédiaires (30), adaptés pour diviser l'intérieur de la chambre d'écoulement de fluide (10) en sections séparées qui sont en communication fluidique les unes avec les autres par l'intermédiaire d'au moins un du premier espacement (40a), du second espacement (40b) et des trous (30c), une quantité limitée de fluide peut s'écouler depuis une section de la chambre d'écoulement de fluide (10) jusqu'à l'autre, à travers les trous (30c).

9. Appareil de chauffage électrique de fluide (100) tel que revendiqué dans la revendication précédente, dans lequel les trous (30c) sont agencés sur la périphérie du déflecteur intermédiaire (30) pour garantir une distribution homogène, à l'intérieur de la chambre d'écoulement de fluide (10), à des régions proximales aux parois de la chambre d'écoulement de fluide (10) et empêchant le fluide de suivre un chemin de moindre résistance entre l'orifice d'entrée (12) et l'orifice de sortie (14).

10. Appareil de chauffage électrique de fluide (100) tel que revendiqué dans la revendication 2, dans lequel chacun des déflecteurs intermédiaires (30) comprend une partie de base (30b) et une pluralité de dents espacées (30d) s'étendant depuis la partie de base (30b) pour définir les fentes (32) entre les dents (30d).

11. Appareil de chauffage électrique de fluide (100) tel que revendiqué dans la revendication précédente combinée avec la revendication 9, dans lequel les trous (30c) sont formés sur la partie de base (30b).

12. Appareil de chauffage électrique de fluide (100) tel que revendiqué dans les revendications 9 et 10, dans lequel les trous (30c) sont formés sur les dents (30d).

13. Appareil de chauffage électrique de fluide (100) tel que revendiqué dans l'une quelconque des revendications précédentes, comprenant un capteur de température monté sur un bossage configuré de façon proximale à au moins un de l'orifice d'entrée et de l'orifice de sortie de la chambre d'écoulement de fluide (10).
